# DEMANDE DE BREVET EUROPEEN

(11) **EP 3 511 431 A1**
(43) Date de publication de la demande: **17.07.2019**
(21) Numéro de dépôt: 18151010.8
(22) Date de dépôt: 10.01.2018
(51) Int. Cl.: C22B 1/00, F27B 1/16, F27B 1/20, F27B 1/26, F27B 1/28, H01M 6/52, C21B 11/00, C22B 7/04

(54) **PROCÉDÉ ET INSTALLATION DE VALORISATION DE PILES ET ACCUMULATEURS USAGÉS**

(71) Demandeur: Fiday Gestion, 70360 Chassey-les-Scey (FR)
(72) Inventeur: GARNIER, Jean-Pierre, 73200 ALLONDAZ (FR)
(74) Mandataire: Berger, Helmut

(57) **Abrégé**

L'invention concerne un procédé de valorisation de piles usagées telles que des piles salines, alcalines, à boutons et des accumulateurs usagés, du type comportant les opérations de broyage des piles et accumulateurs, le cas échéant de séparation magnétique de la fraction fer, pour obtenir un produit en forme d'une poudre appelée black mass, et de valorisation dans un four de fusion.

Le procédé est caractérisé en ce que l'on introduit la black mass, avec ou sans la fraction fer, sous forme d'une poudre avantageusement sèche dans la zone de fusion du four de fusion.

L'invention est utilisable dans le domaine de valorisation des piles et accumulateurs usagés.

## Description

L'invention concerne un procédé et une installation de valorisation de piles usagées telles que des piles salines, alcalines, des piles boutons et des accumulateurs usagés, du type comportant les opérations de broyage des piles et accumulateurs, de séparation magnétique de la fraction fer pour obtenir un sous-produit broyé en forme d'une poudre appelé black mass, et de valorisation dans un four de fusion.

Un procédé de valorisation de ce type est déjà connu. Or, l'opération de valorisation de la black mass est effectuée dans un four de type Waelz.

Ce procédé connu présente l'inconvénient majeur de ne valoriser que 50% des matières contenues dans les piles et accumulateurs, ce qui est la limite de la réglementation européenne. Seuls le fer et le zinc sont valorisés, le manganèse et les autres métaux présents, à savoir du nickel, cuivre, cobalt et carbone ne sont pas valorisés et perdus notamment dans les scories, ce qui peut générer des problèmes environnementaux selon leur utilisation finale.

L'invention a pour but de pallier cet inconvénient de la valorisation insatisfaisante des métaux contenus dans la black mass.

Pour atteindre ce but, le procédé selon l'invention est caractérisé en ce que l'on introduit la black mass sous forme d'une poudre avantageusement sèche dans le bain de métal liquide d'un four de fusion tel qu'un cubilot.

Selon une caractéristique avantageuse de l'invention, la quantité de la black mass à injecter est déterminée en fonction de la composition chimique de la fonte ou de l'acier à produire.

Selon encore une autre caractéristique, des déchets pulvérulents peuvent être ajoutés à la black mass.

Selon encore une autre caractéristique, la composition de la fonte ou de l'acier à produire peut être corrigée ou régulée en quasi temps réel grâce à l'injection adaptée de la matière pulvérulente dans la zone de fusion.

Selon encore une autre caractéristique, on charge au gueulard du four de fusion des déchets ayant une teneur variable en un élément chimique et que l'on injecte ce même élément chimique en poudre dans la zone de fusion en complément, de manière à réguler en temps quasi réel la teneur de la fonte ou de l'acier en cet élément grâce à une mesure spectrométrique sur la fonte ou l'acier en sortie du four.

Selon encore une autre caractéristique, on injecte la black mass avec la fraction fer, si la granulométrie de cette fraction est inférieure de 10 mm environ.

Selon encore une autre caractéristique, on introduit dans la zone de fusion des déchets pulvérulents abrasifs, mélangés à la black mass.

Selon encore une autre caractéristique, la quantité de la black mass à injecter est déterminée en fonction de la teneur en zinc des poussières de fusion sortant du four de fusion, dans le cas où les autres éléments des piles ou accumulateurs ne sont pas déterminants dans la composition de la fonte ou de l'acier à produire.

L'installation pour la mise en oeuvre du procédé est caractérisée en ce qu'elle comprend un four de fusion équipé d'au moins un dispositif d'injection de la black mass dans la zone de fusion du four.

Selon une autre caractéristique, le four est un cubilot équipé de tuyères d'injection d'oxygène dans la zone de fusion, adaptée pour l'injection de la black mass.

Selon une autre caractéristique, le four est un four tel qu'un four électrique ou un haut-fourneau.

Selon encore une autre caractéristique, l'installation comporte un dispositif de contrôle en temps quasi réel de la black mass ou du déchet à injecter et un dispositif, d'épuration des fumées sortant du four, pourvu de moyens de récupération du zinc contenu dans les fumées et d'un système d'abattement de dioxines furannes et métaux lourds.

Selon une autre caractéristique, comportant des moyens de détection de pollutions de la fonte ou de l'acier à fabriquer grâce au dispositif de contrôle de la black mass avant son injection.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un seul mode de réalisation de l'invention et dans lesquels :
- La figure 1 est une vue schématique d'une installation de valorisation des piles et accumulateurs, qui utilisent un cubilot, conformément à l'invention ;
- la figure 2 est une vue schématique d'une tuyère d'injection de la black mass, selon l'invention.

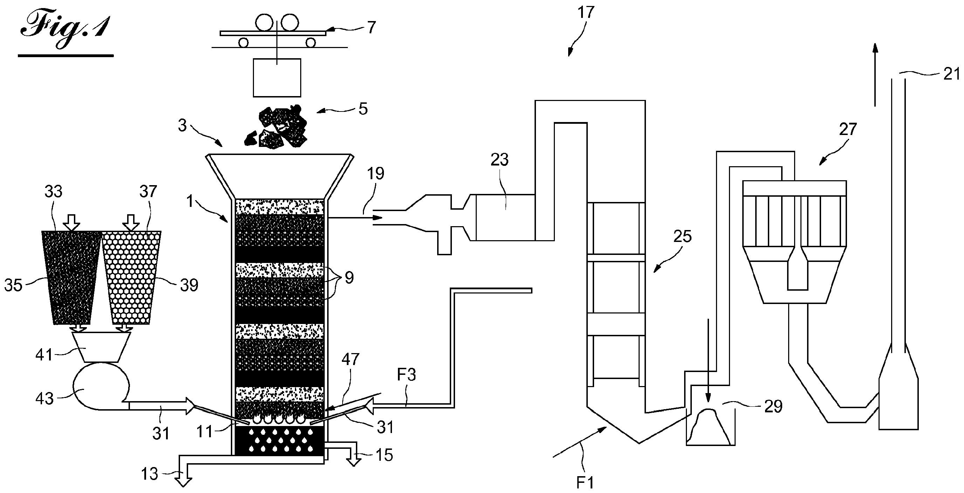

L'invention sera décrite ci-après à titre d'exemple non limitatif, dans le cadre d'utilisation d'un four de fusion de métal formé par un cubilot tel que représenté à la figure 1.

Le cubilot noté 1 selon la figure 1, qui présente la structure générale classique, comprend en haut un gueulard 3 pour l'introduction dans le four des charges 5 notamment du coke, des aciers, de la fonte issus de recyclages, des briquettes de ferro-silicium ou carbure de silicium, des alliages divers en addition et un fondant type castine pour capter et éliminer en continu les oxydes non fusibles. Ces charges ont été amenées au gueulard par des moyens de transport indiqués par la référence 7. La référence 9 indique les couches des charges dans le cubilot. La zone de fusion avec le bain du métal fondu liquide dans le fond du cubilot est indiquée par la référence 11. Les références 13 et 15 désignent respectivement les sorties de la fonte et du laitier liquide.

Au cubilot est associé un système d'épuration des gaz ou fumées de sortie du four, noté 17. Ce système comprend essentiellement, disposé en série entre la sortie 19 du cubilot et l'endroit de rejet dans l'atmosphère des gaz épuré 21, une chambre de combustion 23 pour brûler le monoxyde de carbone, des échangeurs de chaleur 25 dans lesquels les gaz entrent à une température de l'ordre de 800° C et sortent à une température de l'ordre de 250° C, et un filtre à manches 27. La référence 29 indique l'endroit de récupération des poussières issues du filtre 27. En aval de l'échangeur de chaleur, la flèche F1 symbolise l'injection de produit à base de charbon actif dans les gaz pour l'abattement des dioxines, des furannes et des métaux lourds.

Le cubilot est équipé d'un dispositif d'injection d'air et d'oxygène au-dessus de la zone de fusion 11, qui va contenir le bain de métal fondu. Le dispositif d'injection comprend par exemple 5 tuyères d'injection 31 alimentées par un anneau d'alimentation non représenté. L'air injecté par les tuyères est réchauffé à une température de l'ordre de 550-600° C par le passage à travers l'un des échangeurs de chaleur 25, comme cela est symbolisé par la flèche F3. La chaleur ajoutée permet d'économiser du coke à ajouter. Concernant les échangeurs, ils permettent d'abaisser la température des gaz avant l'entrée dans le filtre à manches 27 qui ne supporte pas des températures élevées (maximum 200°C).

Conformément au procédé de valorisation des piles et accumulateurs selon l'invention, on injecte la black mass en forme d'une poudre avantageusement sèche, obtenue par broyage des piles et accumulateurs et séparation magnétique du fer contenu dans le broyat, directement au-dessus du bain du métal fondu liquide 11, à l'aide d'au moins une tuyère d'injection d'air 31. Il est à noter que la black mass en forme de poudre ne peut pas être introduite au niveau du gueulard parce qu'elle serait entraînée par la remontée des gaz vers la sortie du four et le rendement serait faible.

Comme le montre la figure 1, la black mass en poudre désignée par la référence 33 est introduite dans une trémie 35. D'autres déchets d'alliages en poudre notés 37 pourraient être introduits dans une trémie 39.

A partir de ces trémies, un mélange peut être réalisé dans un mélangeur 41, selon un dosage approprié avec les autres déchets. Puis, la black mass seule ou le mélange est envoyé à l'aide d'un pulseur 43 au travers de l'une des tuyères 31 du cubilot au-dessus du bain de métal fondu 11 où la black mass ou le mélange sont directement incorporés dans la fonte liquide avec un minimum de perte.

Il est à noter que l'on peut rajouter une tuyère d'injection 47 au-dessus des autres tuyères 31. Cette position avec injection de black mass et de ferro-alliages dans une zone qui est plus réductrice peut améliorer le rendement de valorisation en limitant les pertes au feu.

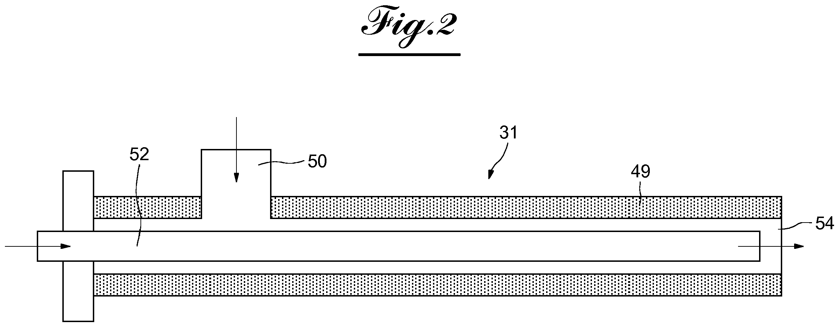

La figure 2 montre le schéma d'une tuyère 31 d'injection de la black mass. La partie active de la tuyère indiquée par la référence 49 est en cuivre et est refroidie par un débit d'eau compte tenu de la température élevée au nez de la tuyère. L'introduction d'air ou de gaz neutre se fait en 50. A l'intérieur de la tuyère est inséré un tube 52 destiné à véhiculer la black mass symbolisée par la flèche. L'air et les gaz ainsi que la poudre de black mass sont donc injectés dans le cubilot en 54.

Il ressort de la description qui précède que l'invention présente un intérêt économique et environnemental considérable.

Le procédé selon l'invention consiste à injecter par les tuyères du cubilot une quantité donnée de black mass chargée en manganèse, zinc, carbone et autres éléments métalliques, tel que du cuivre, nickel, cobalt et pierres rares. Ce procédé est applicable pour les cubilots à vent chaud ou froid, les hauts fourneaux de production de lingots de fonte, les fours électriques à arc ou autres, destinés à la production d'acier ou de fonte au manganèse ou au nickel ou cobalt, équipés d'injecteurs, à partir du moment où les systèmes de traitement des fumées permettent de respecter la réglementation en matière de rejets à l'atmosphère.

La quantité de « black mass » injectée sera basée sur les éléments recherchés pour leur valorisation, à savoir, la teneur en manganèse, nickel ou cobalt à obtenir dans la fonte issue du cubilot ou l'acier ou le ferro alliage dans le cas d'un four à arc. Si la teneur en manganèse, nickel ou cobalt ou plus généralement en autres métaux, n'est pas gênante dans le produit à réaliser, la quantité injectée pourra être basée sur la teneur en zinc recherchée dans les poussières.

La fourniture de black mass peut se faire à partir de sociétés déjà équipées de systèmes de broyage existants, ou directement sur site après investissement dans un équipement de broyage des piles usagées et éventuellement de séparation magnétique de la fraction fer. La fraction fer peut après séparation être chargée au gueulard du four comme les autres aciers. Si l'équipement de broyage permet de réaliser une granulométrie suffisamment faible de la fraction fer (inférieure à 10mm environ), une injection directe de la fraction fer avec la black mass peut être effectuée, ce qui évite l'investissement d'un séparateur magnétique et améliore le rendement en fer dans la fonte par rapport à un chargement au gueulard.

Un autre intérêt de ce procédé est le suivant : la plupart des déchets contenant des éléments métalliques ou du carbone se présentent souvent sous forme pulvérulente. Ils sont aussi de ce fait peu coûteux. Un mélange de ces déchets pulvérulents peut être effectué avec la black mass à injecter, grâce à des trémies doseuses. Ceci permet d'injecter en une seule étape tous les éléments nécessaires à la composition chimique de la fonte ou de l'acier. A titre d'exemple, il existe des déchets pulvérulents contenant du carbure de silicium ou du ferro silicium et du carbone. Dans la composition de la fonte, le carbone et le silicium sont recherchés comme éléments d'alliage et le silicium est coûteux. Les déchets pulvérulents contenant le silicium peuvent être additionnés à la black mass et l'ensemble injecté dans le cubilot ou le four électrique. La poudre de carbure de silicium est très abrasive et peut user rapidement les tuyères. Grâce à la black mass en mélange, qui elle présente un aspect « lubrifiant » grâce au carbone contenu, le taux d'usure peut être réduit.

Ce procédé permet aussi de diminuer les inerties pour obtenir la composition finale recherchée dans la fonte ou l'acier. Dans le cas d'un cubilot, la charge de matière au-dessus des tuyères peut représenter 1 à 2 heures d'encours avant qu'elle n'atteigne la zone de fusion au niveau des tuyères. Ainsi dans le cas d'un changement de composition programmé, l'inertie peut être de 1 à 2 heures. Grâce à l'injection au niveau des tuyères, cette inertie est annulée et l'on obtient la composition immédiatement voulue de façon vérifiable tout de suite par analyse spectrométrique de la fonte sortant en 13. De même, en cas d'erreur dans les charges, la correction en temps normal peut prendre 1 à 2 heures aussi. Avec le procédé proposé, cette correction peut se faire pratiquement en temps réel.

Certains déchets sont peu coûteux du fait que la teneur en éléments recherchés, par exemple en silicium, est variable. Ainsi, il est possible de charger des déchets avec une analyse non constante, donc moins coûteux, au niveau du gueulard du cubilot si leur granulométrie le permet, en basant leur quantité maximale chargée sur la base de la teneur moyenne recherchée dans le métal, et en corrigeant cette teneur si besoin grâce à l'injection aux tuyères d'un complément de cet alliage. Par exemple, chargement au gueulard d'un déchet d'analyse variable contenant entre 25 et 40% de silicium Si, et teneur en silicium demandée dans la fonte de 1.8 à 2.0% de Si. On se base sur une quantité chargée au gueulard correspondante à 1.9% de Si dans la fonte en considérant la valeur maximale du déchet de 40% en Si. Si l'analyse pratiquée en quasi temps réel sur la fonte en sortie montre une dérive vers 1.7% de Si car le déchet ne contenait pas 40% de Si mais seulement 25%, une injection temporaire de déchet pulvérulent à base de Si est alors pratiquée au niveau des tuyères pour apporter le complément nécessaire et remonter la teneur vers 1.9% de Si. Ainsi le système proposé permet d'injecter des déchets à teneur variable, donc moins coûteux au niveau du gueulard et de réguler en temps réel la composition de la fonte par un complément d'injection de déchets en poudre aux tuyères, adaptée en temps réel, voir figure 3.

Encore un autre intérêt de ce procédé est le suivant : Bien que les piles alcalines et salines soient triées avec un degré de pureté supérieur à 98%, une pollution accidentelle par des accumulateurs qui peuvent physiquement ressembler à des piles alcalines et salines est toujours possible. La pollution en particulier par le cadmium Cd provenant d'accumulateurs cadmium nickel peut-être problématique et conduire à des productions d'acier ou de fonte non conformes, sans compter les risques environnementaux. Il est difficile de contrôler par voie analytique une pile ou un accumulateur complet non détruit. Dans le cas de black mass, un contrôle facile peut être réalisé en temps quasi réel avant son injection grâce à un spectromètre à fluorescence X placé au niveau du doseur 41, ce qui permet rapidement de détecter une pollution au Cd avant l'injection de la black mass dans la fonte ou l'acier. Ce dispositif et procédé permettent donc de prévenir toute pollution quasiment à la source et d'éviter de produire de grandes quantités de fonte ou d'acier non utilisables.

Il est à noter que l'invention permet de passer d'un coefficient de valorisation (RE) de 50% à un coefficient de 80% sur l'ensemble de filière de valorisation des piles alcalines et salines.

## Revendications

1. Procédé de valorisation de piles usagées telles que des piles salines, alcalines, à boutons et des accumulateurs usagés, du type comportant les opérations de broyage des piles et accumulateurs, le cas échéant de séparation magnétique de la fraction fer, pour obtenir un produit en forme d'une poudre appelée black mass, et de valorisation dans un four de fusion, **caractérisé en ce que** l'on introduit la black mass, avec ou sans la fraction fer, sous forme d'une poudre avantageusement sèche dans la zone de fusion du four de fusion.

2. Procédé selon la revendication 1, **caractérisé en ce que** la quantité de la black mass à injecter est déterminée en fonction de la composition chimique de la fonte ou de l'acier à produire.

3. Procédé selon l'une des revendications 1 ou 2, **caractérisé en ce que** des déchets pulvérulents peuvent être ajoutés à la black mass.

4. Procédé selon l'une des revendications 1 à 3, **caractérisé en ce que** la composition de la fonte ou de l'acier à produire peut être corrigée ou régulée en quasi temps réel grâce à l'injection adaptée de la matière pulvérulente dans la zone de fusion.

5. Procédé selon l'une des revendications 1 à 4, **caractérisé par le fait que** l'on charge au gueulard du four de fusion des déchets ayant une teneur variable en un élément chimique et que l'on injecte ce même élément chimique en poudre dans la zone de fusion en complément, de manière à réguler en temps quasi réel la teneur de la fonte ou de l'acier en cet élément grâce à une mesure spectrométrique sur la fonte ou l'acier en sortie du four.

6. Procédé selon l'une des revendications 1 à 5, **caractérisé en ce que** l'on injecte la black mass avec la fraction fer, si la granulométrie de cette fraction est inférieure de 10 mm environ.

7. Procédé selon l'une des revendications 1 à 6, **caractérisé en ce que** l'on introduit dans la zone de fusion des déchets pulvérulents abrasifs, mélangés à la black mass.

8. Procédé selon l'une des revendications 1 à 7, **caractérisé en ce que** la quantité de la black mass à injecter est déterminée en fonction de la teneur en zinc des poussières de fusion sortant du four de fusion, dans le cas où les autres éléments des piles ou accumulateurs ne sont pas déterminants dans la composition de la fonte ou de l'acier à produire.

9. Installation pour la mise en oeuvre du procédé selon l'une des revendications 1 à 8, **caractérisée en ce qu'**elle comprend un four de fusion équipé d'au moins un dispositif d'injection de la black mass dans la zone de fusion du four.

10. Installation selon la revendication 9, **caractérisée en ce que** le four est un cubilot équipé de tuyères d'injection d'oxygène dans la zone de fusion, adaptée pour l'injection de la black mass.

11. Installation selon l'une des revendications 9 ou 10, **caractérisée en ce que** le four est un four tel qu'un four électrique ou un haut-fourneau.

12. Installation selon l'une des revendications 9 à 11, **caractérisée en ce qu'**elle comporte un dispositif de contrôle en temps quasi réel de la black mass ou du déchet à injecter et un dispositif, d'épuration des fumées sortant du four, pourvu de moyens de récupération du zinc contenu dans les fumées et d'un système d'abattement de dioxines furannes et métaux lourds.

13. Installation selon l'une des revendications 9 à 12, comportant des moyens de détection de pollutions de la fonte ou de l'acier à fabriquer grâce au dispositif de contrôle de la black mass avant son injection.
